# EUROPEAN PATENT SPECIFICATION

(11) **EP 3 097 335 B1**
(45) Date of publication and mention of the grant of the patent: **08.01.2020**
(21) Application number: 14866682.9
(22) Date of filing: 26.11.2014
(51) Int. Cl.: F16L 37/00, F16L 33/22, F16L 13/007, F16H 61/00, F16L 13/14, F16L 37/02, F16L 41/03, F16L 37/088

(54) **A FLUID COUPLING WITH LOCK CONNECTION**
FLUIDKUPPLUNG MIT FESTSTELLVERBINDUNG
ORGANE D'ACCOUPLEMENT À FLUIDE À RACCORDEMENT À VERROUILLAGE

(30) Priority: 27.11.2013 US 201361909474 P
(43) Date of publication of application: 30.11.2016
(73) Proprietor: Oetiker NY, Inc., Lancaster NY 14086 (US)
(72) Inventor: KUJAWSKI, Anthony, Attica, New York 14011 (US); FREMONT, Bradley, Tonawanda, New York 14150 (US)
(74) Representative: Strehl Schübel-Hopf & Partner
(86) International application number: PCT/US2014/067759
(87) International publication number: WO 2015/081291

(56) References cited:
- CH-A- 476 219
- US-A- 5 452 924
- US-A- 5 909 901
- US-A1- 2005 087 245
- US-A1- 2005 127 044
- US-A1- 2010 224 258
- US-A1- 2013 037 141

## Description

### BACKGROUND

The present disclosure relates, in general, to fluid couplings or connectors and, more particularly, to quick release fluid couplings or connectors.

Quick connectors are frequently employed for releasibly attaching a tube or conduit to another component, such as thermal relief valve assembly, fluid filter, barb hose connector, etc. The quick connector includes a body with the through bore. External threads are formed on one end of the body for threadingly coupling the body of the quick connector to the other component. A seal, such as O-ring, is mounted in external recess on the body for sealingly coupling the body to an internal surface of a bore in the other component.

An internal recess in the body receives an internal seal, such as an O-ring, for sealingly coupling one end of the tube or conduit inserted into the body.

The tubular member has a conical or enlarged flanged portion spaced from the one end which seats within the transition zone of the bore. The body carries a retainer clip, either internally or, as shown in Fig. 1, externally. The body, which can be a quick connector shown in U.S. Patent No. 5,909,901 and manufactured by Jiffy-tite Co., Inc., Lancaster, NY, includes a plurality of radially outward extending protrusions and spaced recesses. The recesses extend through slots formed in the body to snap behind a shoulder on the flanged portion on the tubular member to releasibly lock the tubular member in the body. A seal band and an assurance cap may be provided to insure full seating of the tubular member within the body.

In assembling the tubular member to the body of the quick connector, the end of the tubular member is inserted the first end of the bore in the body. The conical surface of the transition zone on the tubular member forces the recesses of the retainer clip radially outward allowing the enlarged diameter conical portion to pass beyond the retainer clip into the bore 26. The resiliency of the retainer clip then allows the recesses of the retainer clip to snap behind the shoulder on the tubular member locking the tubular member in the body.

US 2005 0127044 A discloses a forced-insertion welded structure which is formed by welding members making up a metal component, the forced-insertion welded structure comprises: a first member with a hole which has the same geometry as a cross section of a forcibly inserted portion of a second member; and the second member having a constant cross section over its length which is similar in shape to the hole; wherein a press-fit interference of the second member relative to the hole of the first member is set to 0.1 mm or more; wherein the second member is pushed against the hole of the first member under a predetermined pressure and at the same time an electric current is applied between the two members to generate electric resistance heat in faying portions of the two members to forcibly push the second member into the hole, thereby forming a joint interface between the second member and the inner wall surface of the hole; wherein the joint thus formed is a solid-state welded joint.

### SUMMARY

A combination of a fluid component and a connector is disclosed in claim 1.

A fluid coupling with a body including the bore receiving a tubular conductor, a retainer clip carried on the body for locking the tubular conduit to the body, a component with a bore extending from an open end, a seal mounted in the bore in the component position to sealingly couple to the tubular conduit extending through the body when the body is mounted in the component, and the body fixedly joined to the component by an interference joint between the body and the component.

The fluid coupling wherein the component has a surface engaged by the shoulder on the body.

The fluid coupling includes a component with a bore extending from an open end. The component is formed of a material capable of forced material displacement. A quick connector body has a through bore adapted to engage a tubular conduit inserted into the bore in the body when the body is disposed in the bore in the component. The body carries a recess for receiving material displaced from the component to non-threading fixedly couple the body to the component.

The material displaced from an internal surface in the bore in the component is disposed in the recess to mechanically lock the body to the component.

A stepped surface is formed in the bore in the component. A seal is mounted on the stepped surface for sealing engagement with the conduit inserted through the body when the body is fixedly attached to the component.

A retainer clip is carried on the body for releasable engagement with the tubular conduit to releasibly lock the tubular conduit to the body.

In another aspect, not covered by the claims, semi-circular recesses are formed in the body and in an inner surface of the bore in the component. The semi-circular recesses are aligned to form a circular cross-section bore extending through adjoining surfaces of the body and the component when the body is seated in the component. A roll pin having a diameter larger than the circular bore is forcibly inserted into and through the bore. The roll pin initially is squeezed and the expands in the bore to form an interference fit with a constant spring force sealingly locking the body to the component together.

In another aspect, not covered by the claims, a surface of one of the component and the quick connector body forms a projection used in a projection welding process to form a semi-molten zone of material which, when solidified, sealingly locks the body to the component.

A method of manufacturing a fluid coupling, not covered by the claims, includes a fluid coupling having a component with the bore extending from an open end adapted to receive a body having a through bore engagable with the tubular conduit inserted into the bore in the body when the body is disposed in the component. The method includes forming the component or the body of a material capable of forced material displacement, forming a material receiving cavity in the body, or the component and displacing material from the component or the body into the cavity by a staking operation to fixedly couple the body to the component.

The step of displacing material further includes the step of displacing material using a staking tool having a plurality of axially extending fingers adapted to engage and displace material from the component into the recess in the body.

In another aspect, the method includes forming mating recesses formed in the component and the quick connector body. A roll pin is forcibly inserted through the aligned recesses, initially is squeezed and then expands in the aligned recess to form an interference fit mechanically locking the quick connector body to the component.

The present quick connector provides a number of advantages over prior quick connector designs. The novel quick connector eliminates the external threads along with the external O-ring used in prior art quick connectors. At the same time, the quick connector has a reduced cost due to less total mass, less length, enables more parts to be made from bar stock, eliminates the external O-ring, eliminates the need for threads and the typical hex bar stock used to form the quick connector which can be replaced with less expensive round stock thereby reducing scrap.

Further, the novel quick connector has a lower profile, a reduced assembly time, improved cleanliness since fewer chips are generated, particularly due to the lack of formation of the threads, the elimination of the machining of the internal seal groove, and improved quality since there are no thread damage concerns.

### BRIEF DESCRIPTION OF THE DRAWING

The various features, advantages and other uses of the present quick connector with lock connection will become more apparent by referring to the following detailed description and drawing in which:
Fig. 1 is a longitudinal partially cross-sectioned view of prior art quick connector and fluid conduit;
Fig. 2 is an enlarged front elevational view of a quick connector body of the present quick connector;
Fig. 3 is a partially cross-sectioned view showing the initial stage of a summary of a quick connector body to another component;
Fig. 4 is an enlarged sectional view taken in this circle four in Fig. 3;
Fig. 5 is a longitudinal partially cross-sectioned view showing the complete assembly of the quick connector body in the component;
Fig. 6 is an enlarged cross-sectional view taken within the circle 6 in Fig. 5;
Fig. 7 is a partially cross-sectioned assembled view of the quick connector and component;
Fig. 8 is a perspective view of a prior art thermal relief valve (TRV) assembly using threaded quick connectors;
Fig. 9 is a perspective view of a thermal relief valve (TRV) assembly having the novel quick connectors with lock connections;
Fig. 10 is a lateral cross-sectional view of the thermal relief valve (TRV) assembly shown in Fig. 9;
Figs. 11A and 11B are perspective in longitudinal cross-sectional views, respectively, of the quick connector body component with a component is an inline filter;
Figs. 12A and 12B are perspective views and longitudinal cross-sectional views showing the quick connector body mounted in hose barb;
Figs. 13A and 13B are side elevational and longitudinal cross-sectional views of two quick connectors mounted on opposite ends of an inline fluid coupling;
Fig. 14 is an exploded cross-sectional view showing modified quick connector body and component lock connector shown in a preassembled position;
Fig. 15 is a cross-sectional view, similar to Fig. 14, but showing the quick connector body in a locked connection with the component;
Fig. 16 is an enlarged front elevational view modified quick connector body;
Fig. 17 is a perspective view of one aspect of staking tool, not covered by the claims, used where the lock connection between the quick connector body and the component is a staked lock connection;
Fig. 18 is a cross-sectional view showing the staking tool of Fig. 17 staking the quick connector body of Fig. 16 to an external component;
Fig. 19 and 20 are cross-sectional view showing stages of the staking operation used to lock the quick connector body of Fig. 16 to the component;
Fig. 21A is a perspective view of a modified quick connector body;
Fig. 21B is a perspective view of a modified staking tool, not covered by the claims, similar to the staking tool depicted in Fig. 17;
Fig. 21C is a cross-sectional view showing the staked lock connection of the quick connector body of Fig. 21A in a component by use of the staking tool shown in Fig. 21B.;
Fig. 21D is a perspective view of the quick connector body and component shown in Fig. 21C;
Fig. 21E is an enlarged, cross-sectional view showing the staking operation using the body and component shown in Figs. 21A-21D;
Fig. 22A is an enlarged cross-sectional view of another aspect of a quick connector body not covered by the claims;
Fig. 22B is a cross-sectioned view showing the locked connection of the quick connector body depicted in Fig. 22A to a component using roll pins;
Fig. 22C is a perspective of a thermal relief valve (TRV) assembly having a plurality of quick connector body shown in Fig. 22A locked to the thermal relief valve (TRV) assembly by roll pins as shown in Fig. 22B;
Fig. 23A is an exploded perspective, partially cross-section view to an another aspect of a quick connector body with a lock connector to a component not covered by the claims;
Fig. 23B is a longitudinal cross-sectional view showing the assembled quick connector body and component of Fig. 23A;
Fig. 24 is a perspective view of another aspect of the fluid coupling;
Fig. 25A is a longitudinal cross-section showing another aspect of a quick connector body;
Fig. 25B is an enlarged perspective view of another aspect of a coupling end for a mating component to the quick connect body shown in Fig. 25A;
Fig. 25C is a longitudinal cross-sectional assembled view of the quick connect body and the coupling end of the mating components shown in Figs. 25A and 25B; and
Fig. 25D is an enlarged perspective view showing the interference displaced material joint between the quick connector body and the coupling end shown in Fig. 25C.

### DETAILED DESCRIPTION

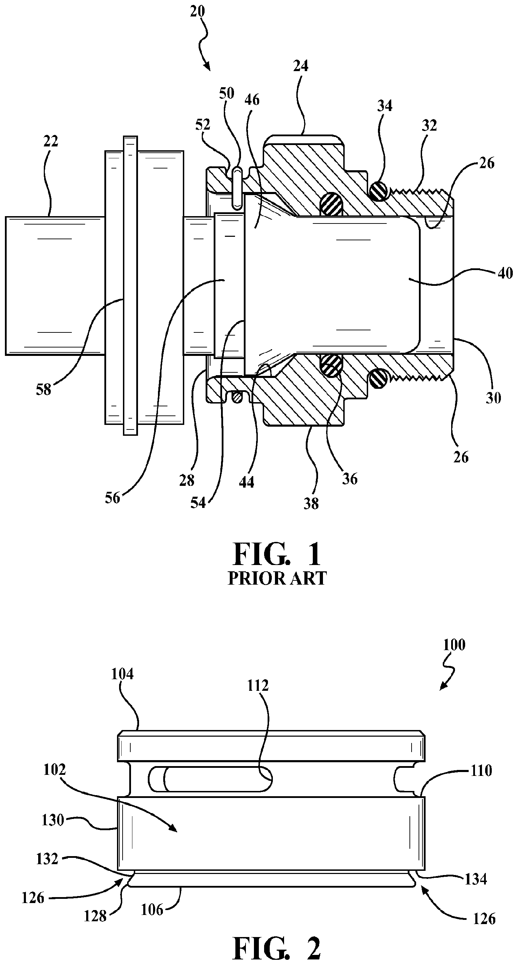

Fig. 1 depicts a prior art quick connector 20 for releasibly attaching a tube or conduit 22 in fluid flow communication with an external housing, not shown, such as a thermal relief valve assembly, etc.

The quick connector 20 includes a body 24 with a through bore 26 extending from a first end 28 to a second end 30. The body 24 has external threads 32 extending from the second end 30 for threadingly coupling the body 24 to an external housing or component. A seal 34, such an O-ring, is mounted in an external recess on the body 24 generally adjacent to the end of the threads 32 for sealingly coupling the body 24 to an internal surface of a bore in the external housing.

An internal recess 36 receives an internal seal, such as O-ring, for sealingly coupling one end 40 of the tubular member 22 to the internal surface forming the bore 26 in the body 24.

The bore 26 in the body 24 is a stepped bore generally extending from a large diameter inlet end portion adjacent the first end 28 of the body 24 through conical portion 44 to a smaller diameter cross-section extending to the second end 30.

The tubular member 22 has a conical or enlarged flange 46 spaced from the one end 40 which seats within the conical portion 44 of the bore 26. Either the body 24 carries the retainer clip 50, internally or, as shown in Fig. 1, externally in a retainer clip 50 receive groove. The body 24, which can be a quick connector shown in U.S. Patent No. 5,909,901 and manufactured by Jiffy-tite Co., Inc., Lancaster, NY, includes a plurality of radially outward extending protrusions and spaced recesses. The recesses extend through slots 52 formed in the body 24 to snap behind a shoulder 54 on the flange portion 46 on the tubular member 22 to releasibly lock the tubular member 22 in the body 24. A seal band 56 and an assurance cap 58 may be provided to insure full seating of the tubular member 22 within the body 24.

In assembling the tubular member 22 to the body 24 of the quick connector 20, the end 40 of the tubular member 22 is inserted the first end 28 of the bore 26 in the body 24. The conical surface of the transition zone 44 on the tubular member 22 forces the recesses of the retainer clip 50 radially outward allowing the enlarged flange 46 to pass beyond the retainer clip 50 into the bore 26. The resiliency of the retainer clip 50 then allows the recesses of the retainer clip 50 to snap behind the shoulder 54 on the tubular member 22 locking the tubular member 22 in the body 24.

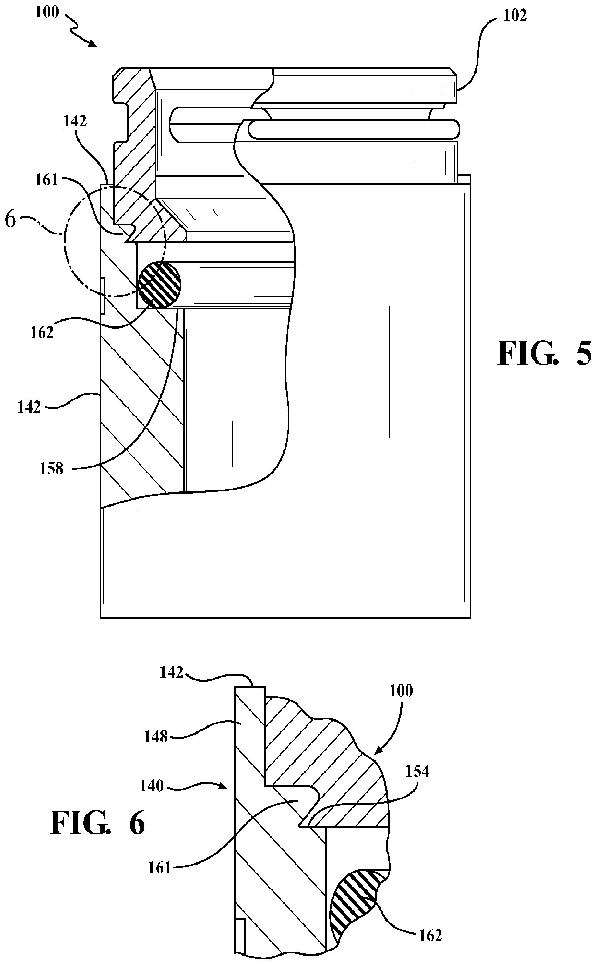

Referring now to Figs. 2-7, one aspect of a novel quick connector 100 includes a one-piece body 102 formed of suitably hard material, such as steel. The body 102 has a first end 104, an opposed second end 106, and a through bore 108 extending from the first end 104 to the second end 106.

A retainer clip receiving groove in the form of an external annular recess or groove 110 is formed on the body 102 spaced from the first end 104. A plurality of apertures, generally in the form of slots 112 are formed in the inner end wall of the groove 110 and open to the bore 108. The slots 112 receive the recesses 114 of a retainer clip 116, such as a retainer clip shown in U.S. Patent No. 5,909,901.

It will be understood that the provision of the groove 110 and the retainer clip 116 is described by way of example. Other forms of retaining a fluid conduit in a quick connector body 102, such as an internal spring clip, etc., can also be employed.

The bore 108 can have a constant inner diameter extending the first end 104 of the body 102 to a transition zone 120 spaced from the second end 106. The transition zone 120 can have a conical shape extending from the constant diameter portion of bore 108 to a smaller diameter bore end 122 at the second end 106 of the body 102.

A material receiving cavity in the form of a recess 126 is formed adjacent the second end 106 of the body 102 for receiving deformable material from an external housing, as described hereafter. The recess 126 includes an annular edge 128 at the second end 106 of the body 102 which is smaller in diameter than an outer surface 130 of the body 102. The recess 126 extends radially inward toward the longitudinal axis of the body 102 in the form of a conical surface 132, for example. The conical surface 132 transitions into a planar wall 134. In cross-section, the recess 126 defines a generally triangular shape as shown in Figs. 2 - 7.

The quick connector 100 is non-removably attached to another mating component 140, such as an external housing or member which, in one aspect, is formed of a softer material, such as 6160 aluminum, than the body 102 of the quick connector 100.

The component 140 can take a number of different forms, as described hereafter, but for purposes of this assembly description, has a generally tubular end portion 142.

The end portion 142 of the component 140 has an open end 144 at a first end 146 which opens to a stepped surface or bore formed of a first longitudinally extending bore portion 148, a radially inward extending first shoulder 150, a smaller diameter longitudinal second bore portion 152, a second radially inward extending wall or shoulder 154 which transitions to a reduced diameter third bore portion 156 which, in turn, transitions to a radially inward extending fourth wall 158 terminating in an inner through bore portion 160.

The fourth radially inward extending wall 158 of the stepped surface forms a seat or shoulder for an internal mounted seal 162. The seal 162 may in the form of the illustrated O-ring. The seal 162 forms a fluid seal between the end 40 of the tubular member 22 and the quick connector 100.

It should be noted that the mounting of the seal 162 on the fourth wall 158 is visible from the open end 144 of the component 140 prior to insertion of the tube end. This provides a more positive visual inspection of the insertion and proper placement of the seal 162 into the component 140 as compared to the need for a special tool to check for the proper insertion of the O-ring 38 in the internal recess 36 in the prior art quick connector body 24 shown in Fig. 1 which is not visible to the open first end 28 of the quick connector body 24.

The inner diameter of the first bore portion 148 is sized to slidably receive the outer diameter portion 130 of the quick connector body 102. The inner diameter of the second inner bore portion 152 is sized to slidably receive the inner edge 128 of the recess 126 on the body 102.

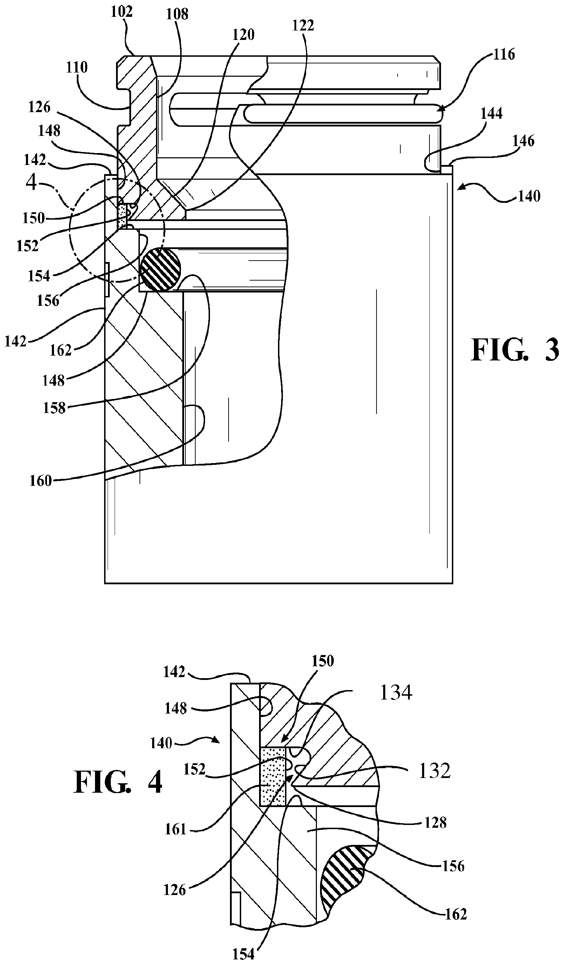

However, the longitudinal extent or distance between the inner edge 128 of the recess 126 and the wall 134 of the recess 126 is smaller than the longitudinal extent or length of the second wall bore portion 154 as shown in Fig. 3. During insertion of the quick connector body 102 through the open end 144 on the first end 146 of the component 140, the surface of the wall 134 of the quick connector body 102 will engage to the first shoulder 150 in the external component 140. However, at this time, the inner edge 128 of the quick connector body 124 is still spaced from the second wall or shoulder 154 in the component 140. Continued forced insertion of the quick connector body 102 into the component 140, combined with forming the quick connector body 102 of a harder material than the material used to form the component 140, will cause a displaced material portion 161 of the material of the component 140 which is capable of forced material displacement to be forcibly deformed and displaced or extruded into the recess 126 on the body 102 as shown in Figs. 4-6 until the second end 106 of the body 102 seats against the second radially inward extending wall or shoulder 156 in the external member 140. The displaced material portion 161 is confined within the interior surfaces of the recess 126 in the body 102 to form a clinch connection which firmly and non-removably mechanically attaches the quick connector body 102 to the component 140 by an interference joint formed of solid inseparable material.

At the same time, the displaced material portion 161 confined within the recess 126 of the body 102 of the quick connector 100 provides a high pull out force resistance to separation of the quick connector 100 from the external member 142.

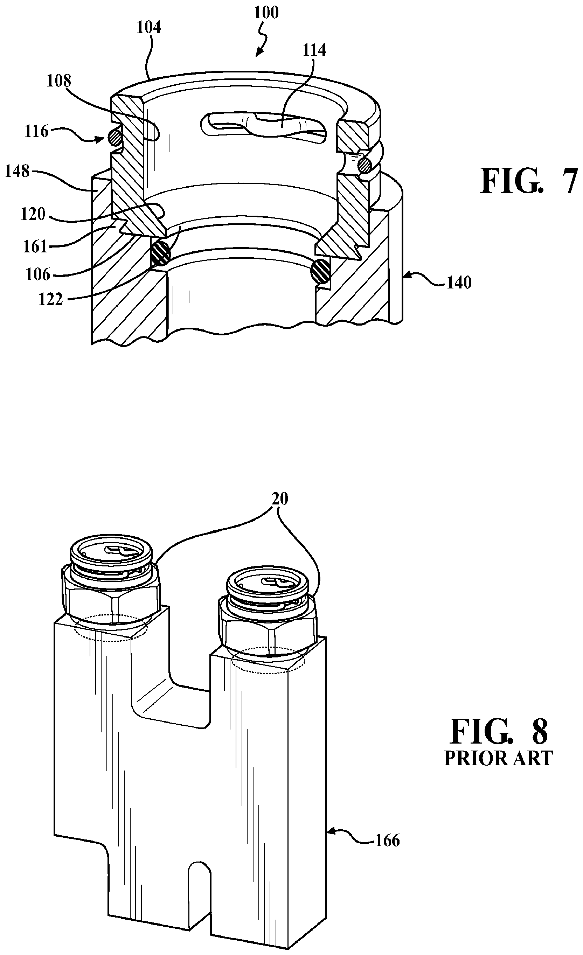

The clinch assembly of the quick connector body 102 to an external member or housing 140 can be applied in a number of different applications. Fig. 8 depicts a prior art thermal relief valve assembly 166 which uses the prior art quick connector 20, shown in Fig. 1, which are threadingly coupled to threaded internal bores at the inlet and outlet ports of the thermal relief valve assembly 166. It should be noted that the thermal relief valve assembly 166 may be provided with three or four ports and the quick connectors 20 may be applied on some or all of the inlet and outlet ports of the thermal relief valve assembly 166.

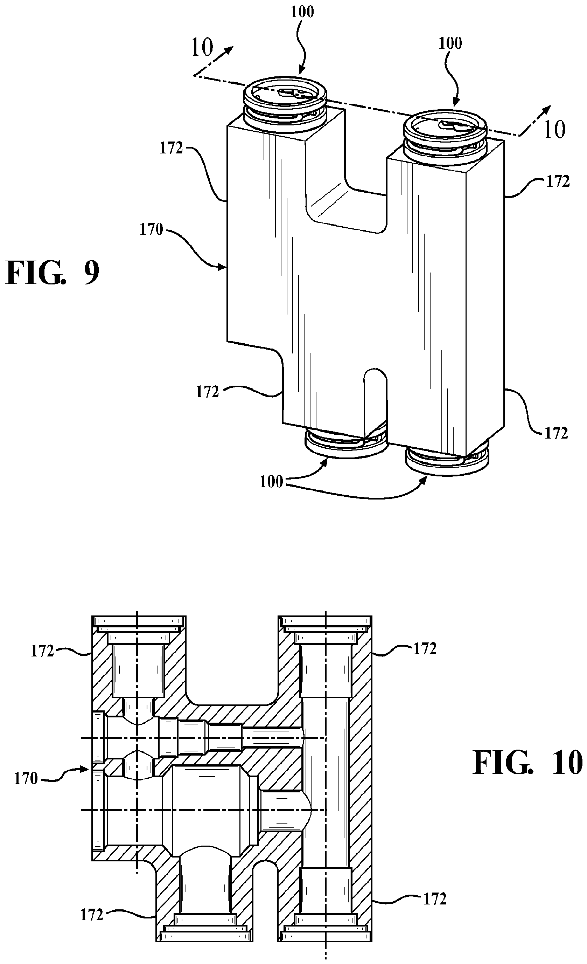

Figs. 9 and 10 depict a thermal relief valve assembly 170, similar to the thermal relief valve 160, but having one or more quick connectors 100 constructed as described above mechanically clinched within the external end portions of the housing of the thermal relief valve assembly 170. As shown in Fig. 10, the end portions 172 define inlet and outlet ports of the thermal relief valve assembly 170. The stepped bore shown in Fig. 3 and described above is formed in one or more of the external end portions 172 of the thermal relief valve assembly 170 to mechanically clinch the quick connector bodies 102 to the housing of the thermal relief valve assembly 170.

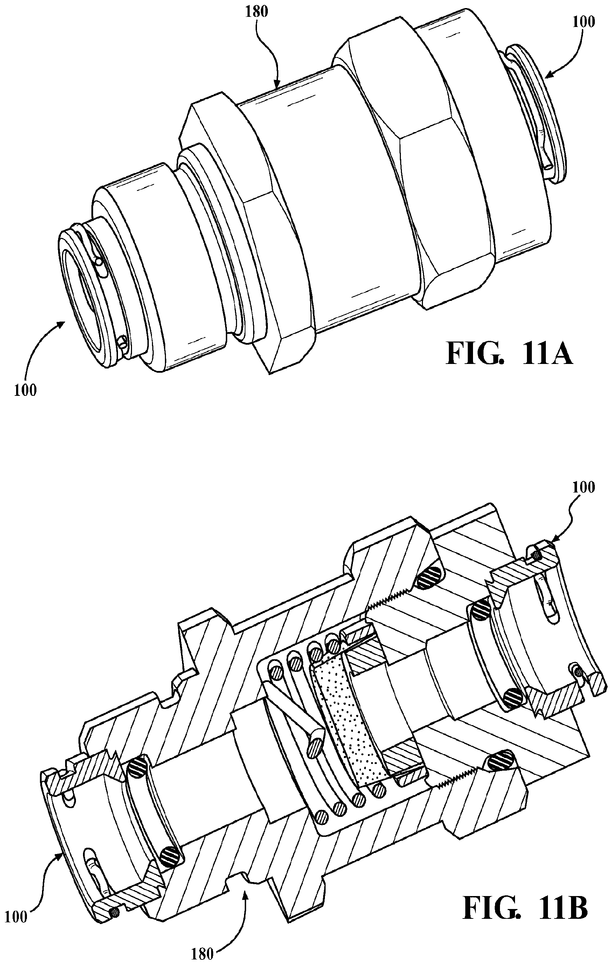

Other applications of the quick connector clinch assembly described above are shown in Figs. 11A and 11B where an inline filter 180 is depicted. Quick connectors 100 may be mounted on one or both of the aligned ends of the through bore extending through the body of the in-line filter 180, with the end portions of the bore extending through the in-line filter 180 having the stepped configuration described above and shown in Fig. 3. The quick connectors 100 are clinched in a non-removable fashion in the stepped bores on the ends of the in-line filter 180 to form a unitary one-piece construction.

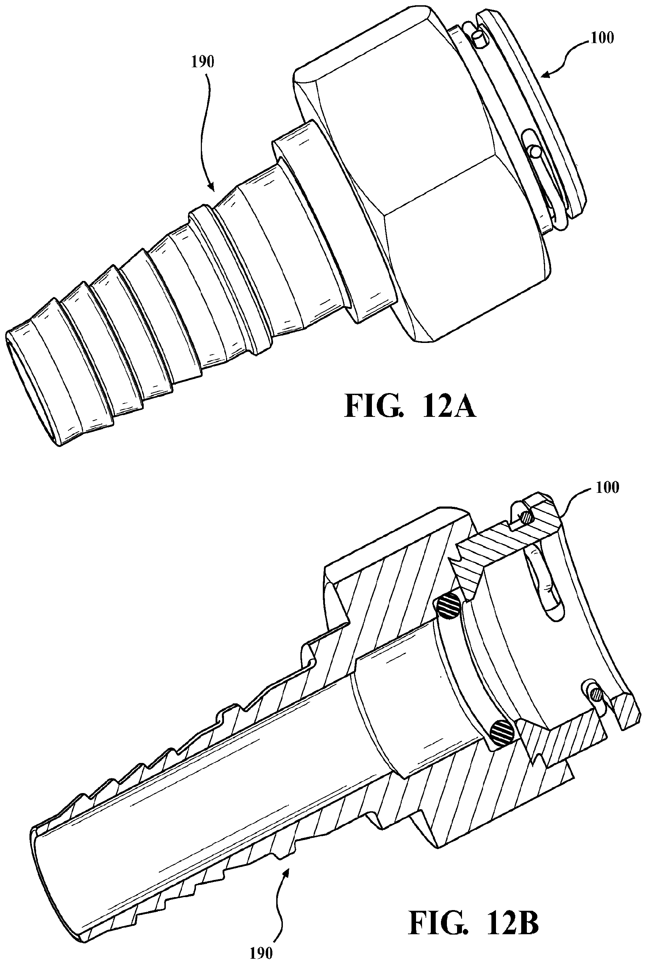

Similarly, as shown in Figs. 12A and 12B, the clinched attachment of the quick connector 100 in a stepped bore at the end of a hose barb 190 can be provided.

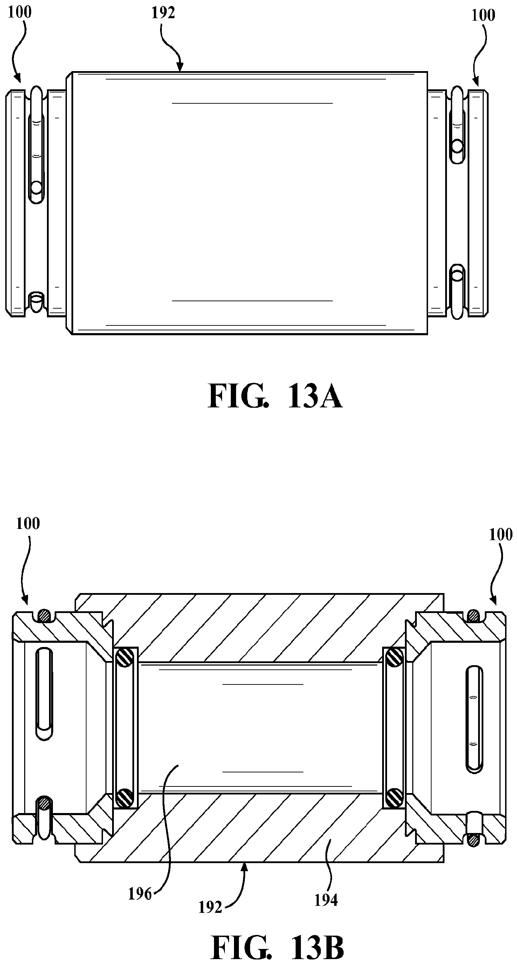

In Figs. 13A and 13B a simple inline hose or conduit connector 192 is shown as having a generally cylindrical body 194 with opposed open ends extending between a through bore 196 may receive quick connectors 100 in a non-removable clinch attachment in stepped bore at the ends of the through bore 196 to form a unitary tubular conduit or hose connection to the connector 192.

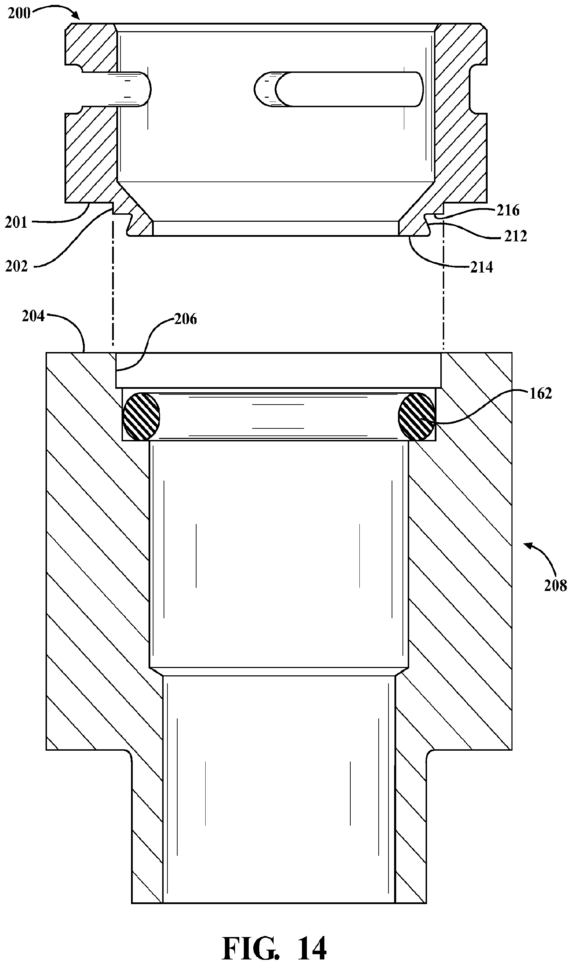

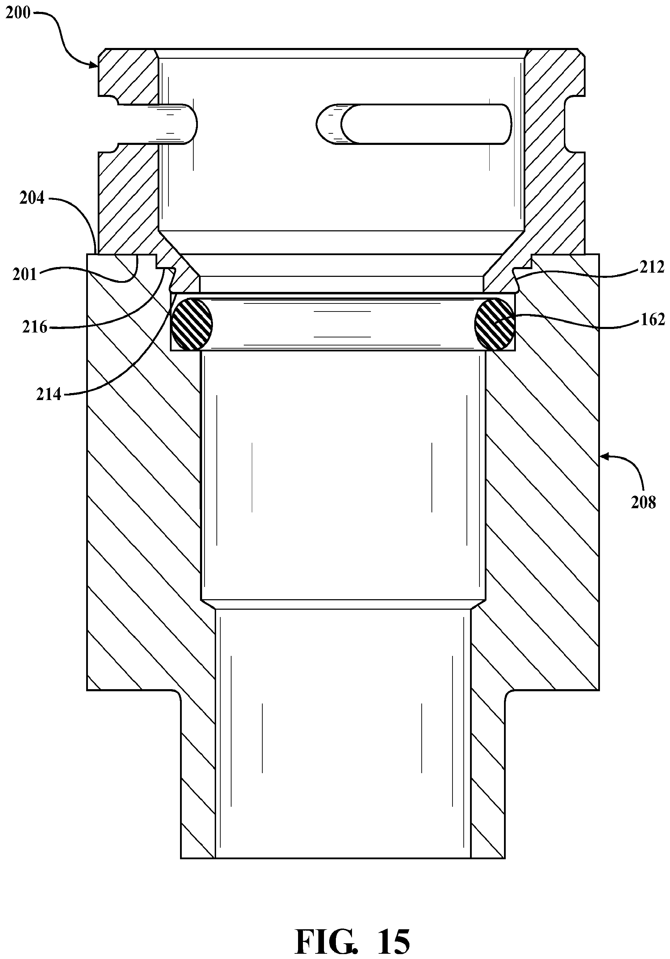

Referring now to Figs. 14 and 15, there is depicted a modification to the quick connector shown in Figs. 1-13B. In this aspect, a quick connector body 200 is similar to the body 100 with the modification of a radially inward extending surface, such as a shoulder 201 formed adjacent to the second end of the body 200 of the quick connector 100. The shoulder 201 and the adjacent axially extending annular surface 202 are configured for engaging a mating end surface 204 and a longitudinally extending inner surface 206 in an external housing 208. A radially inward extending material receiving cavity in the form of a recess 212 extends between a second end 214 of the body 102 which includes radially inward extending surface 216 angularly disposed with respect to the angular surface 202.

As shown in Fig. 15, when the body 102 and the external housing 208 are forcibly urged together material is deformed from the external housing 208 adjacent the end surface 204 into locking engagement in the recess 212 to non-removably lock the body 102 to the external housing 208.

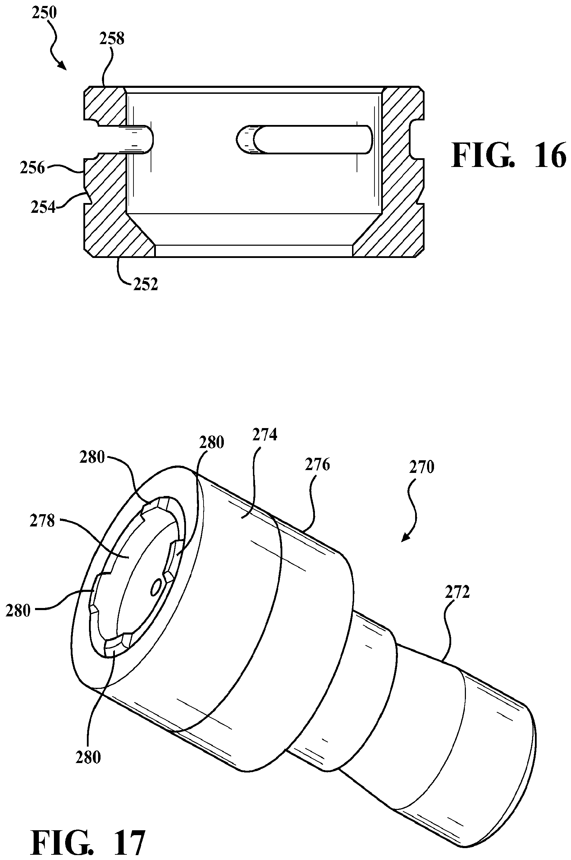

Figs. 1-15 illustrate a clinch joining of a quick connector body to an external housing. Fig. 16-20 depicts a staked joining of a quick connector body to an external housing.

The quick connector body 250, shown in Fig. 16, is similar to the body 102 except that the second end portion 252 of the body 250 defines a generally planar surface. A radially inward extending material receiving cavity, such as a recess 254 is formed in an outer wall 256 of the body 250 intermediate the second end portion 252 and an opposed first end 258 of the body 250.

The quick connector body 250 is configured for staking to an external housing via a staking tool 270 shown by example in Fig. 17. The staking tool 270 includes an elongated shaft 272 which can be mounted to a force generating member, such as a hydraulic air cylinder, not shown. A rigid annular collar 274 seats against an enlarged cylindrical portion 276 integrally formed at one end of the shaft 272. A reduced diameter cylindrical wall 278 extends axially from the cylindrical portion 276 and terminates in a plurality of force applying projections or fingers 280, with four equally circumferentially spaced fingers 280 shown by example only in Fig. 17.

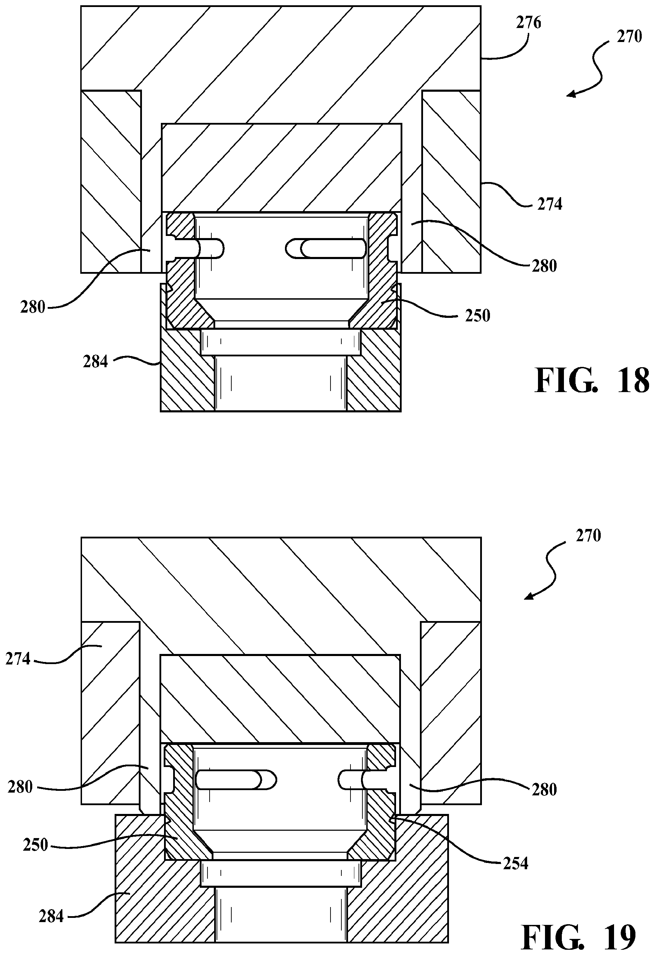

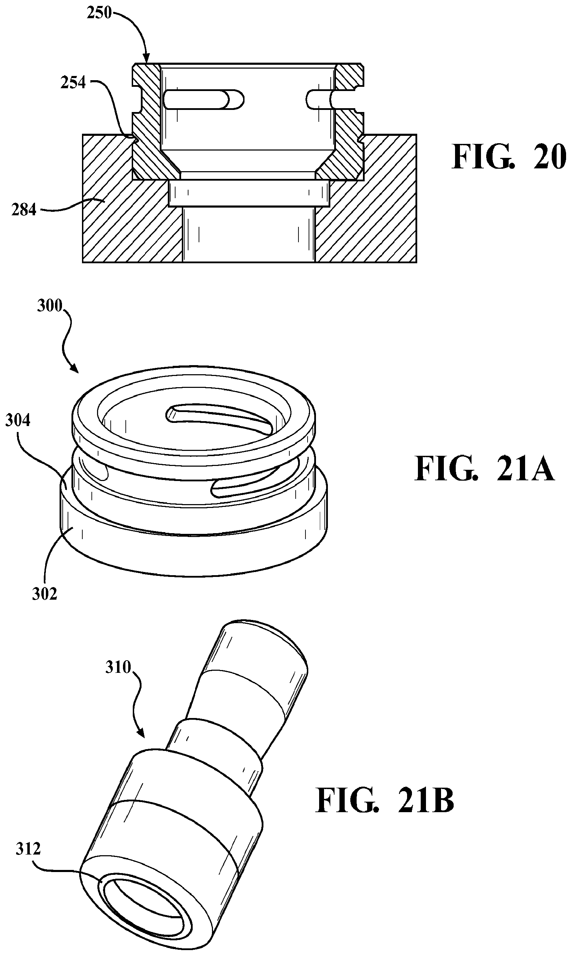

In Fig. 18, for a polygonal or square external housing, the fingers 280 are disposed to engage the enlarged area corner portions of an external housing 284. Fig. 18 depicts a lateral cross-section view of the engagement of the staking tool 270 with a quick connector body 250 mounted in the external housing 284 which is fixedly disposed and axially aligned with the staking tool 270. As the staking tool 270 is moved into engagement with the corners of the external housing 284, as shown more clearly in Fig. 19, which is a cross-sectional view taken between two diametrically opposed corners of the external housing 284, the fingers 280 deform the end of the housing 284 and displace material into the annular recess 254 in the quick connector body 250 thereby locking the quick connector body 250 to the external housing 284 as shown in Fig. 20.

Although not shown, the tubular end surface of the external housing 284 can have a circular cross-section. In this configuration, the fingers 280 of the staking tool 270 could form a continuous annular finger to displace material into the recess 254 in the quick connector body or around the entire 360° of the recess 254.

Referring now to Figs. 21A-21E, there is depicted a quick connector body 300 which is similar to previously described quick connector bodies. The quick connector body 300 includes an enlarged second end 302 with a flat circumferential upper surface 304.

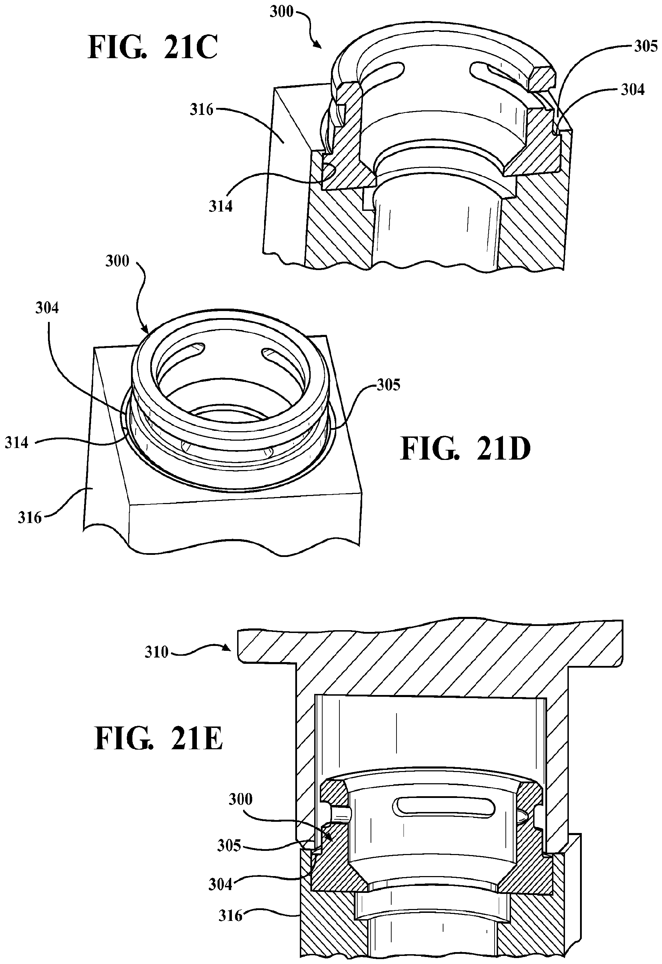

The quick connector body 300 is adapted for use with the staking tool 310 shown in Fig. 21B. Staking tool 310 is similar to the previously described staking tool except that the staking tool 310 includes a continuous circumferential metal ring 312. The diameter of the ring 312 is sized to engage the upper surface of a mating component 316, when the quick connector body 300 is mounted in a stepped bore 314 of the mating component 316. The remainder of the staking tool 310 centers the body 300 on the component 316. The staking tool 310 supplies force causing deformation of the metal of the end of the component 316 causing a displacement 305 of the deformed material into fixed mechanical engagement over the adjacent upper surface 304 of the body 300. This creates an interference joint joining the quick connector body 300 and one end of the component 316 as shown in Figs. 21C, 21D, and 21E.

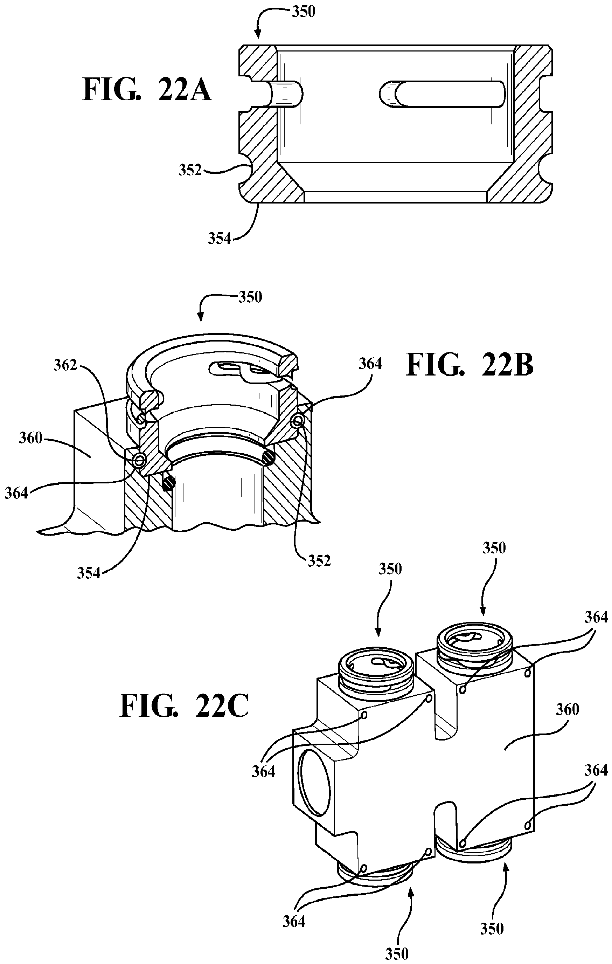

A quick connector body with a mechanical lock connection to a component not according to the invention is shown in Figs. 22A-22C. In this aspect, the quick connector body 350, similar to the previously described quick connector bodies has a radially inward extending, material receiving groove or recess 352 spaced from a second end 354. The recess or groove 352 is shown by example as being in the form of a semi-circle.

The quick connector body 350 is adapted for sliding insertion into the open end of a stepped bore formed in one end of a component or housing 360.

The component 360 carrying the open ended bore has a one or a pair of parallel aligned semi-circular recesses 362 positioned to align with the recess 352 quick connector body 350 when the quick connector body 350 is inserted into the stepped end of the bore in the component 360 as shown in Fig. 22B. The aligned recesses 352 and 362 form a circular bore.

A roll pin 364 in the form of an elongated cylindrical member with an outer diameter slightly larger than the inner diameter of the circular shaped bore formed by the aligned recesses 352 and 362. The roll pin 364 is then forcibly inserted into the opening formed by the aligned recesses 352 and 362 from either side of the component 360. The roll pin 364 is initially squeezed and then expands in the bore to form an interference fit with a constant spring force to lock the body 350 in the component 360.

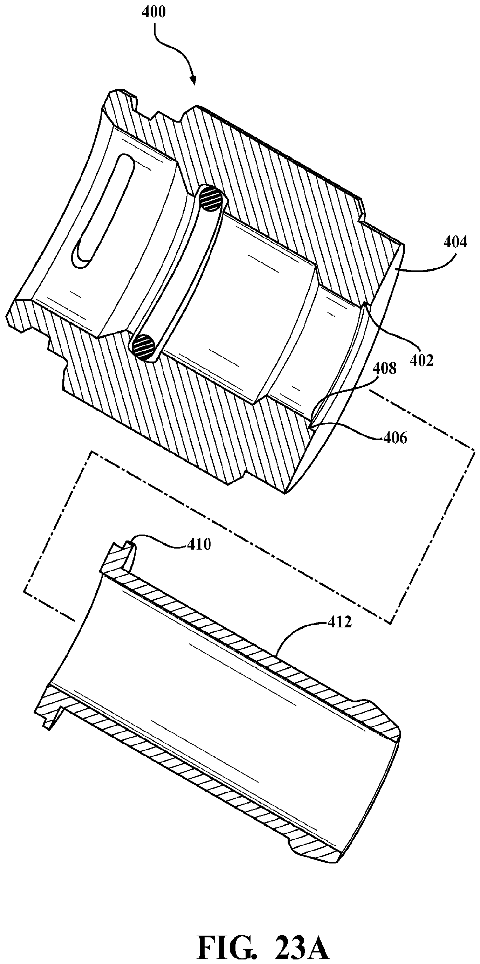

Figs 23A-23B depicts a quick connector body connection, not according to the invention, formed by a projection welding process. A quick connector body 400, similar to the quick connector body 20 shown in Fig. 1 or any of the new quick connector bodies shown in the other figures, has a stepped shaped recess 402 formed at one end 404. The stepped recess 402 forms a longitudinally extending circumferential wall 406 and a radially extending wall 408. The wall 406 has an inner diameter slightly smaller than the outer diameter of one end 410 of a hose barb 412.

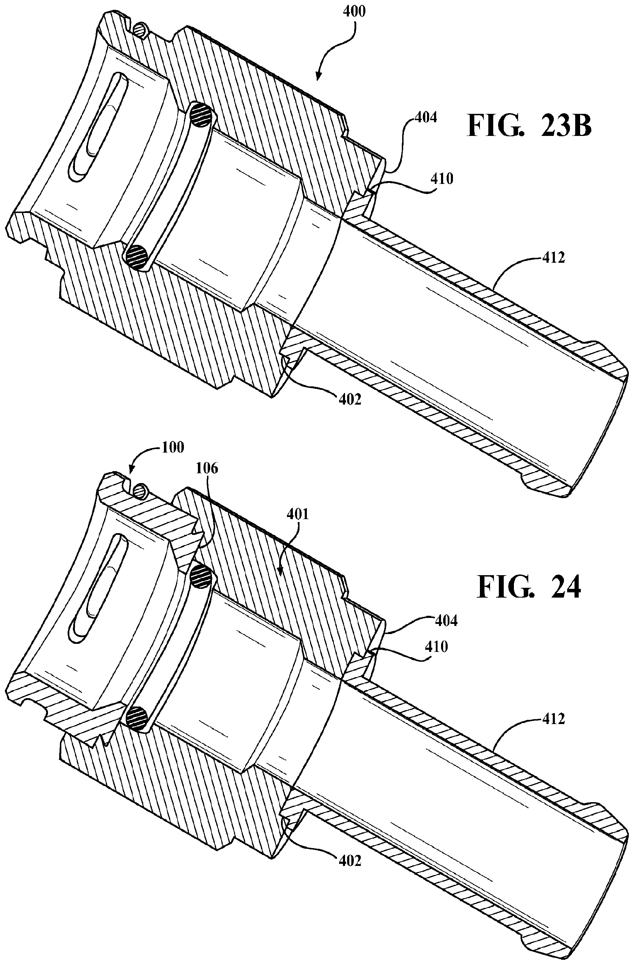

In order to join the quick connector body 400 to a hose barb 412, the quick connector body 410 and the hose barb 412 are brought into engagement with the end of the hose barb 412 seating against the wall 406 at the end 404 of the quick connector body 400. Welding current is supplied to one of the quick connector body 410 or the hose barb 412. This turns a portion of the material forming the wall 406 at the mating surfaces into a semi-molten state allowing the body 400 to seat fully in the stepped recess 402 as shown in Fig. 23B. When allowed to cool and solidify, the hose barb 412 is sealingly and fixedly connected to the quick connector body 400.

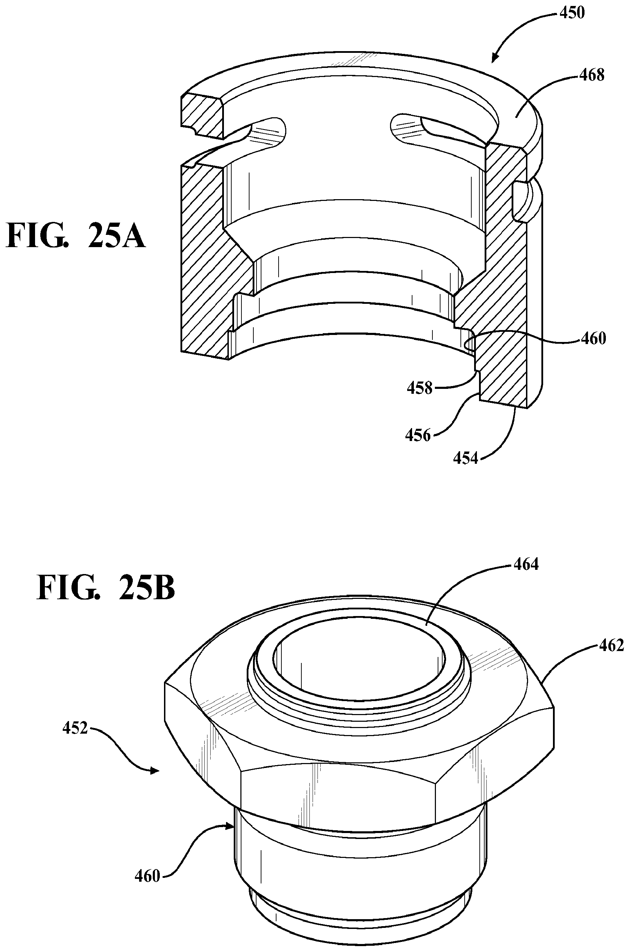

Referring now to Figs. 25A-25D there is depicted another aspect of a fluid coupling. Several of the previously described aspects of the fluid coupling utilize material displacement from the mating component into a material receiving cavity or a recess in the quick connector body to create an interference joint fixedly coupling the quick connector body to the mating component.

The opposite movement of displaced material from the quick connector body into a material receiving cavity or recess in the mating component can be accomplished.

In this aspect, a quick connector body 450, is to be coupled to a mating component 452. Since the displaced material comes from the quick connector body 450, the quick connector body 450 is formed of a softer material than the material used to form the mating component 452.

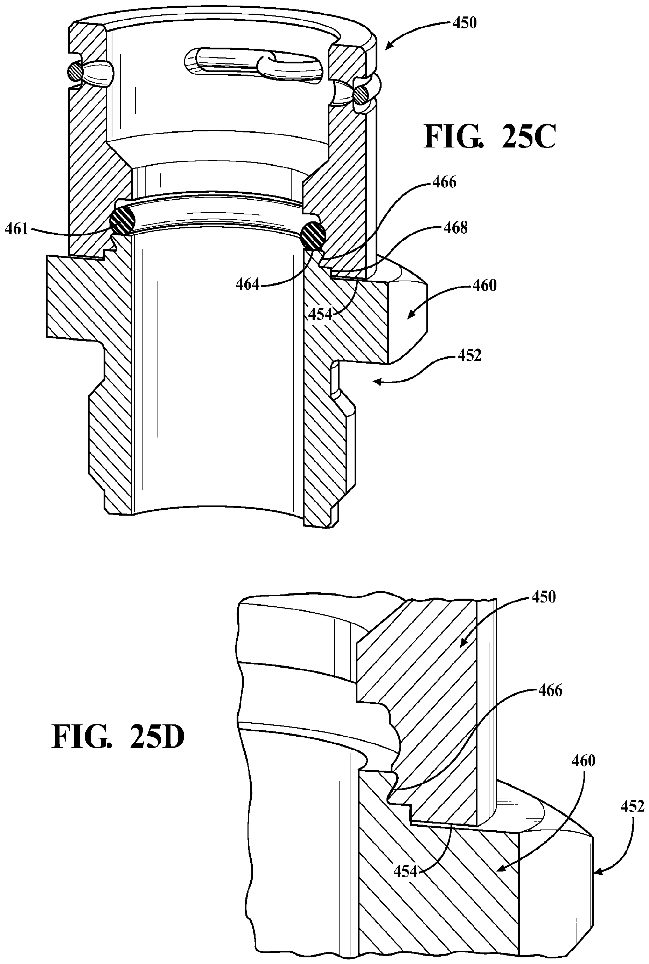

As shown Figs. 25B, 25C, and 25D, the quick connector body 450 includes an annular bottom end 454 surrounding the through bore through the body 450. A first notched surface 456, a shoulder 458 and second notched surface 460 extend from the bottom end 454 internally within the quick connector body 450.

The mating component 452, shown in Figs. 25B-25D is depicted as an end coupling which can be integrally formed on or fixedly joined to the remainder of the mating component, which, as described above, by example, can be a thermal relief valve assembly, an in-line filter, a fluid coupling, etc.

The end coupling 460 of the mating component 452 includes an enlarged flange 462, which may be formed with hex flats spaced from a first end 464. A radially inward extending material receiving cavity, shown in the form of a recess 466 by example, is formed spaced from the upper first end 464. The recess 466 transitions into an annular surface 468 and then to the collar 462.

When the quick connector body 450 is seated or mounted on the first end 464 of the end coupling 460 of the main component 452, the bottom end 454 of the body 450 seats on the collar 460. Pressure is applied to an upper end 468 of the body 450 causing displacement of material adjacent the notch 458 and the recess surface 460 of the body 450 into the recess 466 in the coupling end 460 of the mating component 452. The displaced material in the recess 466 forms an interference joint fixedly and sealingly joining the quick connector body 450 to the mating component 452.

The pressure applied to the quick connector body to displace material from a quick connector body into the recess 466 in the mating component 452, can be by a clinch operation or by use of one of the staking tools shown above where the staking force tool or clinching force is applied to the upper end of the quick connector body.

Thus, there has been disclosed in different aspects described above a two-piece quick connector body and component which are sealingly and fixedly coupled in a locked connection. The locked connection reduces the cost of the quick connector assembly and construction due to the use of less material, less expensive round stock to form a quick connector body, the lack of machining external threads on the quick connector body and internal threads on the end of the bore in the component and the elimination of an internal O-ring shield and difficult to machine internals field mounting recess.

## Claims

1. A combination of a fluid component (140; 360) and a connector (100) that can be non-removably joined to the component (140; 360), wherein
the fluid component (140) has a stepped through-bore with an open end (144), axially spaced shoulders (154, 158) which reduce the internal diameter of the bore from a first largest diameter (148) nearest the open end (144) to a second intermediate diameter (156) and a third smaller diameter (160) farthest from the open end (144), and
the connector (100) comprises a connector body (102) having a through-bore (108) and a lead end (106) with a circumferential recess (126) extending radially inward toward the axis of the connector body (102) to define a leading edge (128) with a diameter that is smaller than the first largest diameter but greater than the intermediate diameter, axially followed by a major diameter exterior surface (130) that fits within said first largest diameter of the component (140) such that forcible axial entry of the connector body (102) into the open end (144) of the component bore causes inelastic displacement of component material, which is softer than the material of the connector (100), into the circumferential recess (126), wherein the displaced material portion (161) is confined within the interior surfaces of the circumferential recess (126) in the connector body (102) to form a clinch connection which firmly and non-removably mechanically attaches the connector body (102) to the component (140) by an interference joint formed of solid inseparable material, thereby to prevent withdrawal of the connector (100) from the component bore.

2. The combination defined in claim 1 wherein the component comprises (140) one of a thermal relief valve assembly (170), an in-line filter (180), a hose barb (190), and an in-line fluid connector.

3. The combination defined in claim 1 further including a seal (162) mounted on the stepped through-bore.

## Patentansprüche

1. Kombination einer Fluidkomponente (140; 360) und eines Verbinders (100), der auf nicht lösbare Weise mit der Komponente (140; 360) verbindbar ist, wobei
die Fluidkomponente (140) eine mit Stufen versehene Durchgangsbohrung mit einem offenen Ende (144) und in axialem Abstand zueinander angeordnete Schultern (154, 158) aufweist, die den Innendurchmesser der Bohrung von einem ersten größten Durchmesser (148) nächstliegend zu dem offenen Ende (144) zu einem zweiten mittleren Durchmesser (156) und einem dritten kleineren Durchmesser (160) verringern, der am entferntesten von dem offenen Ende (144) liegt, und
der Verbinder (100) einen Verbindungskörper (102) mit einer Durchgangsbohrung (108) und einem Vorderende (106) aufweist, das eine Umfangseinschnürung (126) hat, die radial nach innen zu der Achse des Verbindungskörpers (102) verläuft, um eine Führungskante (128) mit einem Durchmesser zu definieren, der kleiner ist als der erste größte Durchmesser aber größer als der mittlere Durchmesser und auf den axial eine Großdurchmesseraußenfläche (130) folgt, die so mit dem ersten größten Durchmesser der Komponente (140) zusammenpasst, dass ein unter Krafteinwirkung bewirkter axialer Eintritt des Verbindungskörpers (102) in das offene Ende (144) der Komponentenbohrung eine inelastische Verschiebung von Komponentenmaterial, das weicher ist als das Material des Verbinders (100), in die Umfangseinschnürung (126) verursacht, wobei der verschobene Materialabschnitt (161) innerhalb der Innenflächen der Umfangseinschnürung (126) in dem Verbindungskörper (102) eingegrenzt ist, um eine Clinch-Verbindung zu bilden, die den Verbindungskörper (102) nicht lösbar mechanisch durch eine aus untrennbarem Feststoffmaterial gebildete Schnittstellenverbindung an der Komponente (140) befestigt, wodurch ein Zurückziehen des Verbinders (100) aus der Komponentenbohrung verhindert wird.

2. Kombination nach Anspruch 1, wobei die Komponente (140) eine Thermo-Entlastungsventil-Anordnung (170), einen Inline-Filter (180), einen Schlauchstutzen (190) oder einen Inline-Fluidverbinder aufweist.

3. Kombination nach Anspruch 1, ferner mit einer Dichtung (162), die auf der mit Stufe versehenen Durchgangsbohrung befestigt ist.

## Revendications

1. Combinaison d'un composant (140 ; 360) pour fluide et d'un connecteur (100) qui peut être joint de façon non amovible au composant (140 ; 360), dans laquelle
le composant (140) pour fluide a un alésage traversant en gradins avec une extrémité ouverte (144), des épaulements (154, 158) axialement espacés qui réduisent le diamètre interne de l'alésage d'un premier diamètre le plus grand (148) le plus proche de l'extrémité ouverte (144) à un deuxième diamètre intermédiaire (156) et un troisième diamètre plus petit (160) le plus éloigné de l'extrémité ouverte (144), et
le connecteur (100) comprend un corps (102) de connecteur ayant un alésage traversant (108) et une extrémité avant (106) avec un renfoncement circonférentiel (126) s'étendant radialement vers l'intérieur vers l'axe du corps (102) de connecteur pour définir un bord avant (128) avec un diamètre qui est plus petit que le premier diamètre le plus grand mais plus grand que le diamètre intermédiaire, axialement suivi par une surface extérieure (130) de diamètre principal qui s'ajuste à l'intérieur dudit premier diamètre le plus grand du composant (140) de telle sorte qu'une entrée axiale à force du corps (102) de connecteur dans l'extrémité ouverte (144) de l'alésage de composant cause un déplacement non élastique du matériau de composant, qui est plus souple que le matériau du connecteur (100), dans le renfoncement circonférentiel (126), dans laquelle la partie (161) de matériau déplacée est confinée à l'intérieur des surfaces intérieures du renfoncement circonférentiel (126) dans le corps (102) de connecteur pour former une connexion par clinchage qui fixe mécaniquement de façon ferme et non amovible le corps (102) de connecteur au composant (140) par un joint d'interférence constitué d'un matériau plein inséparable, pour ainsi empêcher un retrait du connecteur (100) de l'alésage de composant.

2. Combinaison selon la revendication 1 dans laquelle le composant (140) comprend un parmi un ensemble de clapet de décharge thermique (170), un filtre en ligne (180), un raccord à barbillon (190), et un connecteur en ligne pour fluide.

3. Combinaison selon la revendication 1 incluant en outre un joint (162) monté sur l'alésage traversant en gradins.
